# EUROPEAN PATENT SPECIFICATION

(11) **EP 3 290 328 B1**
(45) Date of publication and mention of the grant of the patent: **03.07.2019**
(21) Application number: 16187169.4
(22) Date of filing: 05.09.2016
(51) Int. Cl.: B64C 1/14, B60P 7/14, B62D 33/04, B64D 11/00, B64D 45/00

(54) **DOOR UNIT FOR A MEANS OF TRANSPORT**
TÜREINHEIT FÜR EIN VERKEHRSMITTEL
UNITÉ DE PORTE POUR UN MOYEN DE TRANSPORT

(43) Date of publication of application: 07.03.2018
(73) Proprietor: Airbus Operations GmbH, 21129 Hamburg (DE)
(72) Inventor: Bredemeier, Kai, 21129 Hamburg (DE); Koch, Maik, 21129 Hamburg (DE); Lange, Roland, 21129 Hamburg (DE)
(74) Representative: LKGLOBAL Lorenz & Kopf PartG mbB Patentanwälte

(56) References cited:
- WO-A1-03/057563
- WO-A1-2014/027215
- US-A1- 2003 052 225
- US-A1- 2007 046 071
- US-A1- 2007 295 862

## Description

### Technical field

The technical field relates to a door unit for a means of transport, to a means of transport, in particular an aircraft, comprising such a door unit.

### Background

The operating rooms, e.g. the flight deck of an aircraft, are rooms with high security requirement. Therefore, such rooms, also referred to as secured spaces, are accessible by means of specific doors and door modules which are adapted to prevent unauthorized access to the secured space. Such doors are provided with locking mechanisms granting access only in case certain conditions are fulfilled like the correct entry of a passcode in an electromechanical lock.

Opening of the door during travel of the means of transport is undesired as temporarily opening the door provides access to the secured space. Therefore, in present means of transport, opening the door during travel of the means of transport is generally avoided and/or is only allowed in specific situations. One of such situations can be the situation in which the pilot of an aircraft has to use the lavatory. In such a situation, the pilot has to open the cockpit door and to leave the cockpit/secured space (see e.g. WO2014/027215).

US 2007/0046071 A1 refers to a bulkhead assembly for a vehicle such as, for example, a van or truck that comprises a first panel adjacent and substantially perpendicular to a street-side wall of the vehicle, a second panel adjacent and substantially perpendicular to a curb-side wall of the vehicle, and a door panel disposed between the first and second panels, the door being hingedly attached to one of the first and second panels, wherein the panels are formed from a polymer material. In one embodiment, the panel adjacent the street-side wall of the vehicle (i.e., the driver-side panel) defines a cavity extending rearwardly into the cargo area, the cavity being sized (in terms of the cavity's width) to accommodate the seat-back of the driver's seat.

### Summary

Accordingly, it is desirable to at least address the foregoing and it is the object of the invention to provide an enhanced door unit with improved access as well as to provide an aircraft with an enhanced door unit.

In addition, other desirable features and characteristics will become apparent from the subsequent summary and detailed description, and the appended claims, taken in conjunction with the accompanying drawings and this background.

The object of the invention is solved by a means of transport according to claim 1. Advantageous further formations are set out in the dependent claims.

Described in an aspect of the present invention is a means of transport with a door unit. The door unit is configured to limit access to a secured space and comprises a door module with a door frame and a door coupled to the door frame movably between an open position and a closed position so as to selectively provide access to the secured space through the door. The door module is translatory movable.

The door unit can be a cockpit door unit of an aircraft or generally a door unit of a means of transport for separating a control room of the means of transport from other areas of the means of transport.

The door unit is adapted to selectively provide access to the secured space meaning that the door can be opened for accessing the secured space, e.g. the cockpit, or locked to restrict or prevent access to the secured space. For example, the door of the door unit can be hingedly attached at the door frame so that the door can be opened and closed with a swiveling motion. The door may be attached to the door frame in such a way that a swiveling or pivoting axis about which the door can be rotated is arranged substantially horizontal. In case the door unit is used as a cockpit door unit, the door can thus be arranged in such a manner that it can be pivoted into the cockpit or towards the cockpit when opening the same. In this case, the pivot axis is vertically arranged or substantially vertically with respect to a floor of the aircraft and is pivotable in the forward and/or aft direction of the aircraft.

The door module is adapted to be moved translatory. In the context of the present application, this means that the door module comprising the door frame and the door is translatory movable, preferably in a direction extending in the horizontal plane. In other words, the door frame and the door are movable together so that changing the position of the door frame leads to a change in positon of the door. In this way, it is possible to shift the entire door module comprising the door frame and the door to a different position. Consequently, an access point through which access to the secured space is selectively possible can be shifted. In other words, a dimension of the secured space can be changed by shifting the access point. For example, in case the door module as described before is arranged in a corridor, e.g. an aisle of an aircraft, in particular an aisle of an aircraft connecting the cockpit with the passenger cabin, the door module can be shifted along the corridor and be locked in different locations leading to a change of the access point in the corridor. In this way, it is possible to selectively include a portion of the corridor in the secured space or to exclude certain portions of the corridor from the secured space, just by translatory moving the door module along the corridor. Accordingly, translatory movable can mean that the door module is moved in a direction substantially perpendicular to the pivot axis of the door. Furthermore, the door of the door module can comprise a door panel which extends in a first plane when the door is closed, wherein the first plane can be substantially perpendicular to the longitudinal direction of the means of transport, e.g. the forward-aft direction of an aircraft. The door module can be translatory movable in a direction which is substantially perpendicular to the first plane. It is, however, also possible that the first plane is arranged at an angle with respect to the longitudinal direction ranging between 80° and 100°. Consequently, in a closed position, the door can be arranged angular with respect to the direction in which the door module can be translatory moved. In the context of the present invention, the door can be a hinged, folding, sliding or rotating door. Furthermore, the door does not necessarily consist of a single panel but can comprise multiple panels, e.g. two panels opening in different directions.

According to an embodiment of the present invention, the door module comprises a door hinge defining a swiveling axis of the door, wherein the door hinge is arranged such that the swiveling axis is arranged perpendicular to a movement direction of the door module. Hence, the door can be a hinged door. Accordingly, the door unit is translatory movable with the door being in an upright position. For example, if the door unit is used in an aircraft, the swiveling axis can be arranged substantially perpendicular to a cabin floor and the door unit is movable along the cabin floor with the door being always in an upright position.

According to a further embodiment of the present invention, the door module further comprises a lock assembly for releasably locking said door. The lock assembly can comprise different components and elements allowing to lock the door with the door frame. For example, the lock assembly can comprise locks, e.g. three locks, for selectively locking the door to the door frame. At least one of the locks can be an electromechanical lock. The lock comprises an engaging member which is movably arranged in the door module such that a positive-fit connection between the door and the door frame can be selectively provided. The engaging member can be a bolt which is slidably provided in the door, e.g. a door panel, or in the door frame, and slidably movable into a recess of the door or the door frame, respectively.

The door frame can comprise at least a horizontally extending upper frame portion and a first vertically extending frame portion on which the door can be hingedly mounted. On the opposite side of the door, the door frame can comprise a second vertically extending frame portion which may comprise elements of the above described lock assembly.

According to a further embodiment of the present invention, the lock assembly comprises an electromechanical lock. With such an electromechanical lock, it is possible to electronically lock and unlock the door. In other words, the electromechanical lock can be operated by signals which are input from suitable means including sensors or switches, for example. Three electromechanical lock may be provided, wherein all three electromechanical locks may be provided on one side of the door, e.g. on the side of the above mentioned second vertically extending frame portion.

According to a further embodiment, the door unit comprises cables connected to the electromechanical lock or locks at one end and connectable to a power supply at the other end, and a cable carrier for guiding and protecting the cables upon movement of the door module. For that purpose, the cable carriers can be provided to extend in the movement direction of the door module. The cable carriers serve for guiding the cables such that a movement of the door module is possible without damaging the cables. In particular, the cable guides prevent the cables from kinking and ensure that the distance between the two connecting points of the cables can be varied.

According to a further preferable embodiment, the door unit comprises a guiding device for translatory guiding the door unit. The guiding device can be any means which allows a guiding of the door module in a specified direction. In particular, the guiding device can be adapted to linearly guide the door module. The guiding device can be adapted to guide the door frame. In particular, the guiding device can be constructed to slidably accommodate elements of the door frame or to provide another engagement between door frame elements and the guiding device. The guiding device can be provided, e.g. fixedly mounted, on the floor of the means of transport or integrally formed therewith. If the means of transport is an aircraft, the guiding device can be mounted to the cabin floor in a similar way as seat rails of aircraft seats. For example, the guiding device can be constructed so as to exclusively guide the door module. In this case, the guiding device is mounted on one side of the door module only. On the other hand, the guiding device may additionally comprise portions which couple the upper portion of the door frame with a ceiling of the means of transport, e.g. the cabin ceiling if the means of transport is an aircraft.

According to a further embodiment of the present invention, the guiding device comprises a rail or track for guiding the door module. For example, the guiding device can comprise a guiding groove in which the door module is guided. For that purpose, the door module can comprise suitable guiding means or elements which are accommodated in and/or engaged with the guiding device, e.g. the guiding groove.

According to a further embodiment of the present invention, the door module is at least releasably lockable with the guiding device at end portions of the guiding device so that the door module can be selectively fixed at one of the end portions. Accordingly, the dimension, in particular the length of the guiding device limits the movement distance of the door module. The end portions of the guiding device can be constructed as a stop at which corresponding abutment elements or portions of the door module, in particular the door frame, can abut in order to stop the movement. These end portions can be reinforced in order to be able to receive an impact force resulting from the door unit running against the end portions. In order to provide the above described lockability, the end portions may be adapted for an engagement with the door frame. For example, the end portions can comprise recesses into which engaging bolts provided in the door frame can be inserted. In this way, a positive-fit connection between the door frame and the guiding device can be achieved. However, it is to be mentioned that a suitable lock may also be achieved by a clamping mechanism providing a frictional-fit connection when engaged.

According to a preferable embodiment of the present invention, the door unit can comprise a door module locking device for releasably locking the door module with the guiding device. The door module locking device can be operable by a user on a secured space side of the door module only. Accordingly, the door module cannot be unlocked from outside of the secured area. For example, the door module locking device can be mechanical lock which can be released by operating a lever. The door module locking device can also comprise an electromechanical locking device. This electromechanical locking device can be operated signal driven. A signal can be generated by means of a switch or can be generated by a control unit which is able to process multiple signals and to output a signal for driving the electromechanical locking device.

According to a preferable embodiment of the present invention, the door module locking device comprises an electromechanical locking device allowing an unlocking of the door module locking device only in case a predetermined condition is satisfied. In this embodiment, a predetermined condition needs to be satisfied in order that the electromechanical locking device unlocks or releases the door module. For example, such a condition may be an input from a sensor or other means. For example, a presence sensor may be provided in the surrounding of the door module on the cabin side outside the secured space which may issue a presence signal to the locking device meaning that a person is near the door module. If this is the case, the electromechanical locking device will not unlock the door module.

According to the aspect of the present invention, a means of transport is described comprising a secured space, a first secondary space provided adjacent said secured space, a second secondary space provided adjacent said first secondary space such that said first secondary space is arranged between said secured space and said second secondary space, a passageway connecting said secured space and said second secondary space wherein said first secondary space is accessible from said passageway and a door unit as described above. The door unit is arranged in the passageway in such a manner that the door module is movable between a forward position in which the door module is located on a secured space side of the passageway, and a rearward position in which the door module is located on a second secondary space side of said passageway.

Accordingly, the secured space is connected to the second secondary space via the passageway and the first secondary space is located between the secured space and the second secondary space and accessible from the passageway. On the opposite side of the passageway, a third secondary space which is accessible from the passageway may be provided. Accordingly, the first secondary space and the third secondary space can be located on opposite sides of the passageway and between the second secondary space and the secured space. Instead of the third secondary space, a wall can be provided along the passageway. Furthermore, the passageway preferably comprises a constant width in the movement direction of the door module. Thus, in case the passageway is arranged in the longitudinal direction of the means of transport, the dimension of the passageway in lateral or horizontal direction is constant. In this way, it is possible to move the door module comprising a fixed width along the passageway. The passageway can comprise a rectangular shape meaning that the floor region within the passageway has a rectangular dimension.

With the above arrangement of the door unit in a manner that the door module is movable along the passageway, it is possible to render the first secondary space accessible from the secured space without opening the door of the door module. A user present in the secured space may simply shift the door module in the direction towards the second secondary space up to a position, in which the first secondary space is accessible. The first secondary space may be accessible via a door. Accordingly, if the door module has been moved into the rearward or aft position, the door of the first secondary space is accessible from the passageway on a side of the door module facing the secured space. In other words, one could say that the dimension of the secured space can be changed by moving the door module as depending on the position of the door module, a portion of the passageway is included or added to the secured space.

According to a further aspect of the present invention, the door unit comprises a door module locking device operable from the secured space side for releasably locking the door module with the guiding device selectively at the forward position or the rearward position.

Accordingly, the door module can be releasably locked with the guiding device. Such a releasably locking can be achieved by a positive-fit connection between the door module and the guiding device. For example, the door module can be provided with an engagement means which is engageable with corresponding counterparts of the guiding device. For example, the guiding device may comprise recesses in which the engagement means can be engaged. The engagement means may be a movable bolt or rod.

The door module locking device can be operable from the secured space side. Preferably, the door module locking device is operable from the secured space side only and at least not from the second secondary space side. For example, in case the second secondary space is a passenger cabin of an aircraft, the door module locking device is not operable from the passenger cabin side of the door module. Consequently, a person present in the second secondary space cannot operate the door module locking device. In this way, only persons present on the secured space side of the door module can operate the door module locking device. As mentioned above, the door module is movable in such a manner that the access to the first secondary space, e.g. a door of the first secondary space, is located on the secured space side of the door module. If the door is positioned in this way, the passageway or at least a major portion of the passageway and the first secondary space are located on the secured space side and may therefore be regarded as areas increasing the secured space. Accordingly, in such a configuration, the door module locking device can be operated from the secured space, the passageway and/or the first secondary space.

In the context of the present invention, the forward position may be a position in which the door module is closest to the secured space. Likewise, the rearward position can be considered a position in which the door module is located farthest away from the secured space.

According to a further preferable embodiment of the present invention, the door module locking device is configured so as to be operable only in case a predetermined condition is fulfilled. In other words, in case the predetermined condition is not fulfilled, the door module locking device cannot be operated. This means, that the door module locking device will only allow an unlocking of the door module from the guiding device in case the predetermined condition is fulfilled. For example, the predetermined condition may be a condition in which no person is near the door module on the second secondary space side and/or no person is in the first secondary space.

According to a further preferable embodiment, the means of transport further comprises a presence sensor for determining a presence of a person in the first secondary space, wherein the door module locking device is operable only if the presence sensor determines that no person is present in the first secondary space.

Accordingly, as long as a person is present in the first secondary space, the door module cannot be unlocked and moved. Therefore, when the door module is positioned in the forward position and a person, e.g. a passenger of the means of transport, is in the first secondary space, the above mentioned predetermined condition is sensed by the sensor and in this example not fulfilled. Hence, the door module locking device does not unlock the door module even if a user pushes an unlocking button or otherwise tries to unlock the door module, for instance. In this way, it is prevented that a person may gain access to the secured space via the first secondary space by remaining in that space when the door module is moved to the rearward position. On the other hand, if the door module locked in the rearward position and a person accesses the first secondary space from the secured space, the sensor will sense that a person is present in the first secondary space and will provide a corresponding signal prohibiting an unlocking of the door module as long as the person remains in the first secondary space. In this way, it can be prevented that a person from the secured space which intends to only temporarily remain in the first secondary space is excluded from the secured space by another person by moving the door module to the forward position. For example, if the means of transport is an aircraft, the secured space may be a cockpit and the first secondary space may be a lavatory. A pilot may need to use the lavatory on a long-haul flight and, therefore, may move the door module to the rearward position to get access to the lavatory. The latter system now actively prevents a movement of the door module as long as the pilot is in the lavatory so that the co-pilot cannot exclude the pilot from the secured side by moving the door module.

As is obvious from the latter description, such a configuration also allows to use the first secondary space as a lock for transferring goods, e.g. food, from the second secondary space to the secured space simply by putting the goods into the first secondary space when the door module is in the forward position, then moving the door module to the rearward position and taking out the goods from the first secondary space on the secured side. In this way, there does not have to be a person to person contact for transferring goods.

According to a further embodiment of the present invention, the means of transport further comprises an operating means, preferably a switch, for operating the door module locking device and provided in the first secondary space, wherein the door module locking device is configured such that when the door module is arranged and locked in said reward position, the door module is unlockable only by operating the operating means in the first secondary space.

Accordingly, similar to the earlier described mechanism comprising a presence sensor, the present embodiment comprises an operating means which enables an unlocking of the door module by the door module locking device. In other words, an operation of the operating means can be regarded as the above described predetermined condition being fulfilled. Accordingly, with such a configuration, a user is required to operate the operating means provided in the first secondary space if it is intended to move the door module from the rearward position to the forward position. Similar to the above described configuration comprising a presence sensor, the configuration according to the present embodiment now actively prevents a movement of the door module as long as a person is still in the first secondary space so that another person cannot exclude the person in the first secondary space from the secured side by moving the door module. The door module is merely unlockable from the inside of the first secondary space. Preferably, the operating means such as a button or switch is located near a door providing access to the first secondary space. In this way, a system can be implemented in which the user has to push the operating means in the first secondary space and a further operating means simultaneously or within a given time frame for unlocking the door module. Furthermore, the operating means can be configured such that it is only active or operable in case the door module is in the rearward position. Such a configuration is necessary in case the operating means directly unlocks the door module as otherwise, a person having entered the first secondary space on the second secondary space side of the door module could activate the operating means and unlock the door module. This is, however, to be explicitly prevented. It is favorable that the door module locking device can only be unlocked in case a button on the secured space side is pushed and that an operating means in the first secondary space is provided in addition only to prevent an undesired movement of the door module while a person is inside the first secondary space.

According to a further preferable embodiment, the above means of transport is an aircraft, the secured space is a cockpit, the first secondary space is a lavatory provided adjacent the cockpit in a longitudinal direction of the aircraft, the second secondary space is a cabin of the aircraft, the passageway is an aisle of the aircraft connecting the cabin with the cockpit and wherein the door unit is arranged in the aisle such that the door module is movable between a forward position, in which the translatory movable door module is located on a cockpit-side of the aisle, and an aft position in which the translatory movable door module is located on a cabin-side of the aisle.

It is to be noted that instead of the above electromechanical locks or locking devices, purely mechanical constructions could be used as well.

Additional features and advantages may be gleaned by the person skilled in the art from the following description of exemplary embodiments, which are not to be construed as limiting, however, drawing reference to the attached drawings.

### Brief description of the drawings

The present invention will hereinafter be described in conjunction with the following drawing figures, wherein like numerals denote like elements, and:
Fig. 1 shows a plan view of an aircraft comprising a door unit according to the present invention;
Fig. 2 shows an enlarged view of the front portion of the aircraft of Fig. 1;
Fig. 3 shows a plan view of a door unit according to the present invention with a door module being arranged in the forward positon and with an open door;
Fig. 4 shows a plan view of the door unit of Fig. 2 with the door module being arranged in the forward positon and with the door closed;
Fig. 5 shows a plan view of the door unit of Figs. 3 and 4 with the door module being arranged in the aft position;
Fig. 6 shows an enlarged upper section of a door module; and
Fig. 7 shows a cable guide for guiding cables from the door module to the secured space.

All figures are only schematic depictions of exemplary embodiments in which, in particular, distances and dimensional correlations are not presented to scale.

### Detailed description of embodiments

The following detailed description is merely exemplary in nature and is not intended to limit application and uses. Furthermore, there is no intention to be bound by any theory presented in the preceding background or summary or the following detailed description.

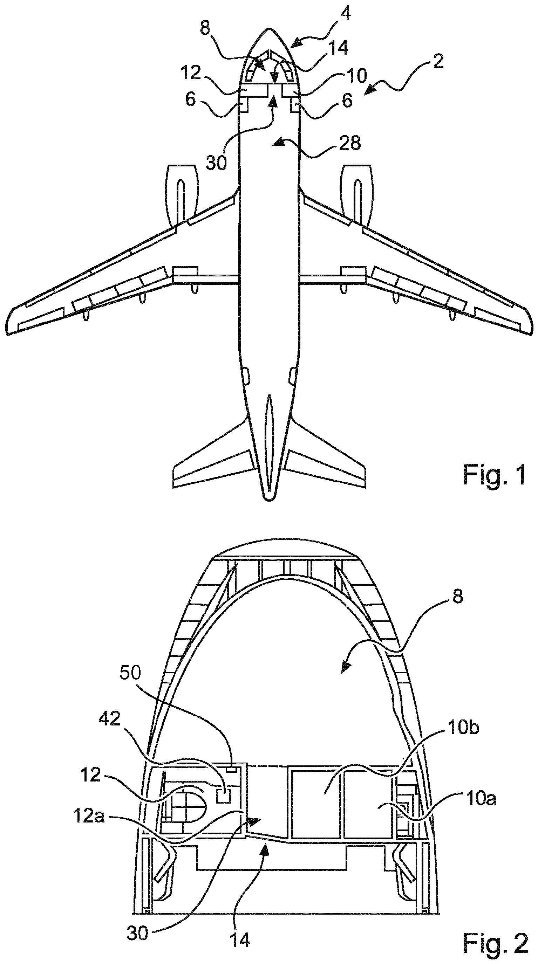

Fig. 1 shows an aircraft 2 comprising a door unit 14 according to an embodiment of the present invention. The aircraft 2 comprises a front portion 4 with a cockpit 8, accommodation space 10 for accommodating trolleys or galley components, for instance, a lavatory 12, an aisle 12 arranged between the accommodation space 10 and the lavatory 12 and providing a passageway from a passenger cabin 28 to the cockpit 8, as well as two doors 6, one on either lateral side of the aircraft 2.

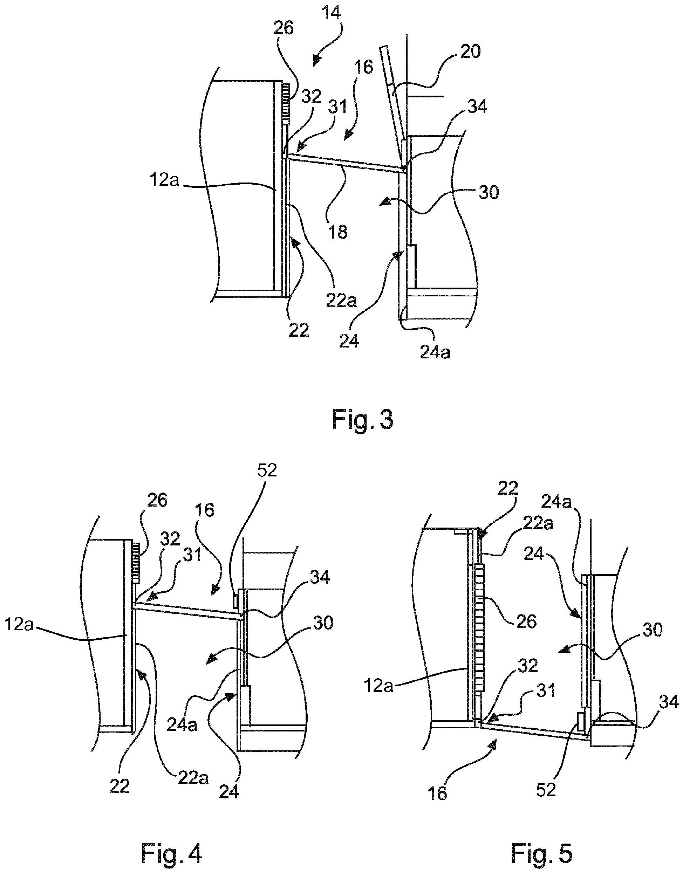

The enlarged view of the front portion 4 of the aircraft 2 as shown in Fig. 2 depicts that in the present embodiment the accommodation space 10 is subdivided into two compartments 10a, 10b which are adapted to accommodate trolleys therein. Furthermore, the accommodation space 10 comprises a laterally inner wall which faces a door 12a of the lavatory 12. The aisle 30 is arranged between the laterally inner wall of the accommodation space 10 and the door 12a of the lavatory 12. As is further shown in Fig. 2, the door unit 14 is arranged between the lavatory 12 and the accommodation space 10 such that a door module extends over the aisle 30 in lateral direction, i.e. from the left side to the right side in Fig. 2. The door unit 14 is described in detail below with reference to Figs. 4 to 7.

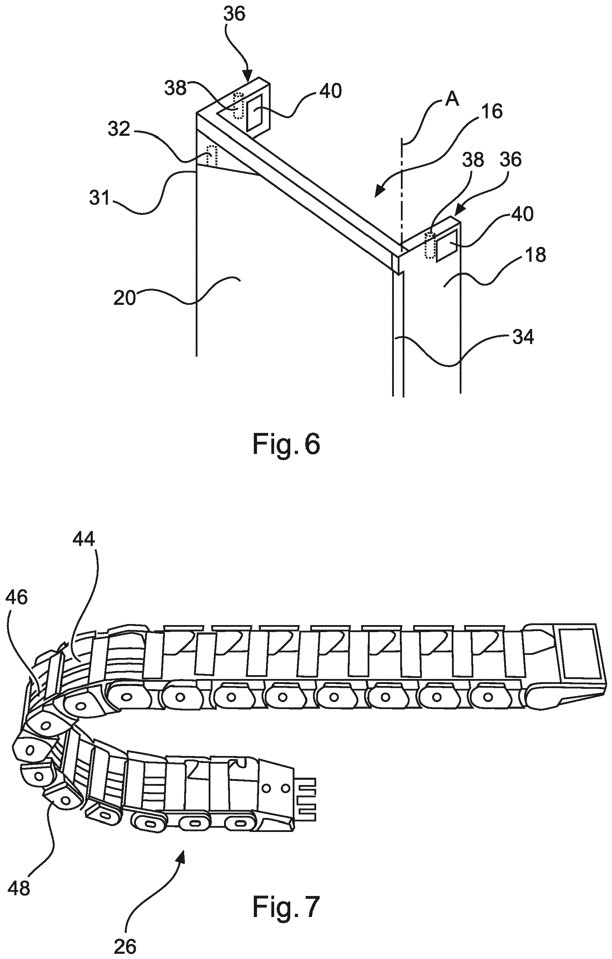

Fig. 3 shows a plan view of the door unit 14 according to the present embodiment with a door module 16 being arranged in the forward positon in which the door module 16 is positioned near the cockpit 8, and with an open door 20. The door module 16 comprises the door 20, a door frame 18 to which the door 20 is mounted by means of a door hinge 34 defining a swiveling axis A (shown in Fig. 6). The door 20 is swivelable into or towards the secured space 8. The door module 16 comprises a lock assembly 31 with an electromechanical lock 32 which grants or prevents an opening of the door 20. Although only one electromechanical lock 32 is indicated, the present embodiment comprises three electromechanical locks which are configured to releasably lock the door 20 with the door frame 18 of the door module 16.

The lock assembly 32 is also depicted in Fig. 6 which is an enlarged perspective view of an upper end of the door module 16. The electromechanical lock 32 is also depicted in this drawing by an outline of a locking bolt of the electromechanical lock 32 which is engaged with the door frame 18.

As is shown in Figs. 3-5, the door unit 14 further comprises guiding devices 22, 24 in the form of tracks 22a, 24a for guiding the door module. The guiding devices 22, 24 extend in the longitudinal direction on both lateral sides of the aisle 30 and are configured to support the door module 16 linearly movable in the longitudinal or forward-aft direction of the aircraft 2. In the drawings, the guiding devices 22, 24 as shown are provided in the cabin ceiling in order to support the upper end of the door module 16 and are fixedly attached to the aircraft fuselage. Further corresponding guiding devices (not shown in the drawings) are provided on the cabin floor and support the door module 16 from below. A cable guide 26 is provided in order to guide cables connecting the door module 16 with a power source for supplying certain elements of the door module 16 with electricity, e.g. the electromechanical lock 31 or a door module locking device 40 (shown in Fig. 6) and a switch 52.

The cable guide 26 is shown in Fig. 7 in greater detail and comprises multiple links arranged pivotably with respect to each other and structured so as to comprise a hollow interior in which cables 44, 46 are guided. Referring back to Figs. 3-5, the cable guide is coupled to the door module 16, i.e. to a movable element of the construction, at one end and is coupled to a fixed portion of the aircraft such as a portion in the ceiling. Moreover, the cable guide 26 is arranged such that the cables 44, 46 are guided in the longitudinal direction.

The door unit 14 is configured such that the door module 16 is movable between a forward positon as shown in Figs. 3 and 4 and an aft or rearward position as shown in Fig. 5. As shown in Fig. 6, the door module 16 comprises multiple door module locking devices 36 each comprising an electromechanical locking device 40 which is able to drive a locking pin 38. The locking pin 38 can be shifted in the upward direction so as to protrude from the upper end of the door frame 18 and into a recess provided in the guiding devices 24, 26. Likewise, although not shown in the drawings, electromechanical locking devices may also be provided on the lower portion of the door frame 18 in a manner that the locking pins can be shifted so as to protrude from the lower end of the door frame 18 and to engage with a recess provided in guiding devices arranged in the floor of the aircraft. With such a configuration, it is possible to securely lock the door module 16 in the forward and rearward positions.

The electromechanical locking devices 40 are operable by the switch 52 as shown in Figs. 4 and 5. The switch is arranged on the side of the secured space and at the door frame 18 at a position where a user can easily reach the same for operation. Connected with the electromechanical locking devices 40 are an operating means 50 and a presence sensor 42 as shown in Fig. 2. The operating means 50 is a button in the present embodiment. The operating means 50 and the presence sensor 42 issue a signal indicating that the electromechanical locking devices 40 are allowed to unlock the door module 16 when the switch 52 is operated. In other words, positive signals from the presence sensor 42 and the button 50 may be prerequisite for the operation of the switch 52 and an unlocking of the door module 16. Generally, one of the presence sensor 42 and the operating means 50 may be enough. Furthermore, in case the operating means 50 is arranged as in the present embodiment, the function of the operating means 50 is only active in case the door module 16 is locked in the rearward position as shown in Fig. 5.

The function of the door unit 14 is briefly described in the following for the event that the pilot needs to use the lavatory 12 during a flight. The door 20 is closed and the door module is locked in the forward position as shown in Fig. 4. In order to be able to access the lavatory 12 via door 12a, the door 20 of the door module 16 does not have to be opened. Rather, the pilot can operate switch 52 in order to unlock the door module 16 such that it is movable in the rearward or aft direction. The presence sensor 42 detects whether a person is present in the lavatory 12. If this is the case, the door module 16 will not be unlocked by the door module locking device 36 although the pilot operated the switch 52. On the other hand, if the presence sensor 42 detects that no person is present in the lavatory 12, there door module 16 is unlocked and the pilot can move the door module to the rearward position as shown in Fig. 5 where the door module 16 is automatically locked in position. Since the door module 16 is now located at a position in which the pilot can enter the lavatory 12 through door 12a. As long as the pilot is present in the lavatory 12, it is not possible to unlock and move the door module 16. As soon as the pilot has left the lavatory, the presence sensor 42 will issue a signal indicating and effecting that an unlocking of the door module 16 is allowed from a presence perspective. Furthermore, the pilot operates the button 50 which issues a further signal indicating that unlocking the door module is allowed. Such a signal can be valid for a few second, e.g. 3 to 8 seconds, giving the pilot the chance to push the switch 52 within that time frame in order to finally unlock the door module 16. As soon as the pilot then activates the switch 52, the door module 16 is unlocked and the pilot can move the door module 16 towards the cockpit. As soon as the door module is at the forward position as shown in Fig. 4, the door module 16 is locked again.

In conclusion, it is pointed out that terms like "comprising" or the like are not intended to rule out the provision of additional elements or steps. Let it further be noted that "a" or "an" do not preclude a plurality. In addition, features described in conjunction with the different embodiments can be combined with each other however desired. It is also noted that the reference numbers in the claims are not to be construed as limiting the scope of the claims. Moreover, while at least one exemplary embodiment has been presented in the foregoing summary and detailed description, it should be appreciated that a vast number of variations exist.

It should also be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing an exemplary embodiment, it being understood that various changes may be made in the function and arrangement of elements described in an exemplary embodiment without departing from the scope as set forth in the appended claims.

## Claims

1. Means of transport (2) comprising a secured space (8), a first secondary space (12) provided adjacent said secured space (8), a second secondary space (28) provided adjacent said first secondary space (12) such that said first secondary space (12) is arranged between said secured space (8) and said second secondary space (28), a passageway (30) connecting said secured space (8) and said second secondary space (28) wherein said first secondary space (12) is accessible from said passageway (30), a door unit (14) for a means of transport, said door unit (14) being configured to limit access to a secured space (8) and comprising, a door module (16) comprising a door frame (18) and a door (20) coupled to said door frame (18) movably between an open position and a closed position so as to selectively provide access to said secured space (8) through said door (20), wherein said door module (16) is translatory movable, wherein the door unit (14) is arranged in said passageway (30) in such a manner that the door module (16) is movable between a forward position in which said door module (16) is located on a secured space side of said passageway (30), and a rearward position in which said door module (16) is located on a second secondary space side of said passageway (30).

2. Means of transport (2) according to claim 1, wherein said door module (16) comprises a door hinge (34) defining a swiveling axis (A) of said door (20), said door hinge (34) being arranged such that said swiveling axis (A) is arranged perpendicular to a movement direction of said door module (16).

3. Means of transport (2) according to one of claims 1 or 2, wherein said door module (16) further comprises a lock assembly (31) for releasably locking said door (20).

4. Means of transport (2) according to claim 3, wherein said lock assembly (31) comprises an electromechanical lock (32).

5. Means of transport (2) according to claim 4, further comprising cables connected to said electromechanical lock (32) at one end and connectable to a power supply at the other end, and a cable carrier (26) for guiding and protecting said cables upon movement of said door module (16).

6. Means of transport (2) according to one of the preceding claims, further comprising a guiding device (22, 24) for translatory guiding said door unit (16).

7. Means of transport (2) according to claim 6, wherein said guiding device (22, 24) comprises a rail or track (22a, 24a) for guiding said door module (16).

8. Means of transport (2) according to claim 7, wherein said door module (16) is at least releasably lockable with said guiding device (22, 24) at end portions of said guiding device (22, 24) so that said door module (16) can be selectively fixed at one of said end portions.

9. Means of transport (2) according to claim 8, further comprising a door module locking device (36) for releasably locking said door module (16) with said guiding device (22, 24), said door module locking device (36) being operable by a user on a secured space side of said door module (16) only.

10. Means of transport (2) according to claim 9, wherein said door module locking device (36) comprises an electromechanical locking device (40) allowing an unlocking of said door module locking device (36) only in case a predetermined condition is satisfied.

11. Means of transport (2) according to claim 1 to 10, wherein said door unit (14) comprises a door module locking device operable from said secured space side for releasably locking said door module (16) with said guiding device (22, 24) selectively at said forward position or said rearward position, wherein said door module locking device (36) is preferably configured so as to be operable only in case a predetermined condition is fulfilled.

12. Means of transport (2) according to claim 11, further comprising a presence sensor (42) for determining a presence of a person in said first secondary space (12) wherein said door module locking device (36) is operable only if said presence sensor (42) determines that no person is present in said first secondary space (12).

13. Means of transport (2) according to claim 11 or claim 12, further comprising an operating means (50), preferably a switch, for operating said door module locking device and provided in said first secondary space (12), wherein said door module locking device (36) is configured such that when said door module (16) is arranged and locked in said rearward position, said door module (16) is unlockable only by operating said operating means (50) in said first secondary space (12).

14. Means of transport according to one of claims 1 to 13, wherein said means of transport is an aircraft (2), said secured space (8) is a cockpit, said first secondary space (12) is a lavatory provided adjacent said cockpit (8) in a longitudinal direction of said aircraft (2), said second secondary space is a cabin (28) of said aircraft, said passageway is an aisle (30) of said aircraft connecting said cabin with said cockpit and wherein said door unit (14) is arranged in said aisle (30) such that said door module (16) is movable between a forward position, in which said translatory movable door module (16) is located on a cockpit-side of said aisle (30), and an aft position in which said translatory movable door module (16) is located on a cabin-side of said aisle (30).

## Patentansprüche

1. Verkehrsmittel (2), umfassend einen gesicherten Raum (8), einen ersten sekundären Raum (12), der benachbart dem gesicherten Raum (8) bereitgestellt ist, einen zweiten sekundären Raum (28), der benachbart dem ersten sekundären Raum (12) bereitgestellt ist, so dass der erste sekundäre Raum (12) zwischen dem gesicherten Raum (8) und dem zweiten sekundären Raum (28) eingerichtet ist, einen Durchgang (30), der den gesicherten Raum (8) und den zweiten sekundären Raum (28) verbindet, wobei der erste sekundäre Raum (12) von dem Durchgang (30) zugänglich ist, eine Türeinheit (14) für ein Verkehrsmittel, wobei die Türeinheit (14) ausgelegt ist, den Zutritt zu einem gesicherten Raum (8) zu beschränken, und ein Türmodul (16) umfasst, das einen Türrahmen (18) und eine Tür (20) umfasst, die mit dem Türrahmen (18) bewegbar zwischen einer offenen Position und einer geschlossenen Position gekoppelt ist, um so selektiv einen Zutritt zu dem gesicherten Raum (8) durch die Tür (20) zu gewähren, wobei das Türmodul (16) translatorisch bewegbar ist, wobei die Türeinheit (14) in dem Durchgang (30) derart eingerichtet ist, dass das Türmodul (16) bewegbar ist zwischen einer Vorwärtsposition, in der das Türmodul (16) auf einer Seite eines gesicherten Raums des Durchgangs (30) angeordnet ist, und einer Rückwärtsposition, in der das Türmodul (16) auf einer Seite eines zweiten sekundären Raums des Durchgangs (30) angeordnet ist.

2. Verkehrsmittel (2) nach Anspruch 1, wobei das Türmodul (16) ein Türscharnier (34) umfasst, das eine Schwenkachse (A) der Tür (20) definiert, wobei das Türscharnier (34) derart eingerichtet ist, dass die Schwenkachse (A) rechtwinklig zu einer Bewegungsrichtung des Türmoduls (16) eingerichtet ist.

3. Verkehrsmittel (2) nach einem der Ansprüche 1 oder 2, wobei das Türmodul (16) ferner eine Verriegelungsanordnung (31) zum lösbaren Verriegeln der Tür (20) umfasst.

4. Verkehrsmittel (2) nach Anspruch 3, wobei die Verriegelungsanordnung (31) ein elektromechanisches Schloss (32) umfasst.

5. Verkehrsmittel (2) nach Anspruch 4, ferner umfassend Kabel, die mit dem elektromechanischen Schloss (32) an einem Ende verbunden sind und mit einer Energiezufuhr an dem anderen Ende verbunden werden können, und einen Kabelträger (26) zum Führen und Schützen der Kabel bei der Bewegung des Türmoduls (16).

6. Verkehrsmittel (2) nach einem der vorhergehenden Ansprüche, ferner umfassend eine Führungsvorrichtung (22, 24) zum translatorischen Führen der Türeinheit (16).

7. Verkehrsmittel (2) nach Anspruch 6, wobei die Führungsvorrichtung (22, 24) eine Schiene oder Spur (22a, 24a) zum Führen des Türmoduls (16) umfasst.

8. Verkehrsmittel (2) nach Anspruch 7, wobei das Türmodul (16) mindestens lösbar mit der Führungsvorrichtung (22, 24) an Endabschnitten der Führungsvorrichtung (22, 24) verriegelt werden kann, so dass das Türmodul (16) selektiv an einem der Endabschnitte befestigt werden kann.

9. Verkehrsmittel (2) nach Anspruch 8, ferner umfassend eine Türmodul-Verriegelungsvorrichtung (36) zum lösbaren Verriegeln des Türmoduls (16) mit der Führungsvorrichtung (22, 24), wobei die Türmodul-Verriegelungsvorrichtung (36) von einem Bediener nur auf einer Seite eines gesicherten Raums des Türmoduls (16) betrieben werden kann.

10. Verkehrsmittel (2) nach Anspruch 9, wobei die Türmodul-Verriegelungsvorrichtung (36) eine elektromechanische Verriegelungsvorrichtung (40) umfasst, die ein Entriegeln der Türmodul-Verriegelungsvorrichtung (36) nur in einem Fall ermöglicht, wenn eine vorherbestimmte Bedingung erfüllt wird.

11. Verkehrsmittel (2) nach Anspruch 1 bis 10, wobei die Türeinheit (14) eine Türmodul-Verriegelungsvorrichtung, die von der Seite eines gesicherten Raums betrieben werden kann, zum lösbaren Verriegeln des Türmoduls (16) mit der Führungsvorrichtung (22, 24) selektiv in der Vorwärtsposition oder der Rückwärtsposition umfasst, wobei die Türmodul-Verriegelungsvorrichtung (36) vorzugsweise derart ausgelegt ist, dass diese nur in einem Fall betrieben werden kann, wenn eine vorherbestimmte Bedingung erfüllt wird.

12. Verkehrsmittel (2) nach Anspruch 11, ferner umfassend einen Anwesenheitssensor (42) zur Bestimmung einer Anwesenheit einer Person in dem ersten sekundären Raum (12), wobei die Türmodul-Verriegelungsvorrichtung (36) nur betrieben werden kann, wenn der Anwesenheitssensor (42) bestimmt, dass keine Person in dem ersten sekundären Raum (12) anwesend ist.

13. Verkehrsmittel (2) nach Anspruch 11 oder Anspruch 12, ferner umfassend ein Betriebsmittel (50), vorzugsweise einen Schalter, zum Betreiben der Türmodul-Verriegelungsvorrichtung, und das in dem ersten sekundären Raum (12) bereitgestellt ist, wobei die Türmodul-Verriegelungsvorrichtung (36) derart ausgelegt ist, dass, wenn das Türmodul (16) in der Rückwärtsposition eingerichtet und verriegelt ist, das Türmodul (16) nur durch Betreiben des Betriebsmittels (50) in dem ersten sekundären Raum (12) entriegelt werden kann.

14. Verkehrsmittel nach einem der Ansprüche 1 bis 13, wobei das Verkehrsmittel ein Flugzeug (2) ist, wobei der gesicherte Raum (8) ein Cockpit ist, wobei der erste sekundäre Raum (12) eine Toilette ist, die benachbart dem Cockpit (8) in einer Längsrichtung des Flugzeugs (2) bereitgestellt ist, wobei der zweite sekundäre Raum eine Kabine (28) des Flugzeugs ist, wobei der Durchgang ein Gang (30) des Flugzeugs ist, der die Kabine mit dem Cockpit verbindet, und wobei die Türeinheit (14) in dem Gang (30) derart eingerichtet ist, dass das Türmodul (16) bewegbar ist zwischen einer Vorwärtsposition, in der das translatorisch bewegbare Türmodul (16) auf einer Seite eines Cockpits des Gangs (30) angeordnet ist, und einer hinteren Position, in der das translatorisch bewegbare Türmodul (16) auf einer Seite einer Kabine des Gangs (30) angeordnet ist.

## Revendications

1. Moyen de transport (2) comprenant un espace sécurisé (8), un premier espace secondaire (12) disposé adjacent audit espace sécurisé (8), un second espace secondaire (28) disposé adjacent audit premier espace secondaire (12) de telle sorte que ledit premier espace secondaire (12) soit agencé entre ledit espace sécurisé (8) et ledit second espace secondaire (28), un couloir (30) reliant ledit espace sécurisé (8) et ledit second espace secondaire (28) dans lequel ledit premier espace secondaire (12) est accessible à partir dudit couloir (30), une unité de porte (14) pour un moyen de transport, ladite unité de porte (14) étant configurée pour limiter l'accès à un espace sécurisé (8) et comprenant un module de porte (16) comprenant un cadre de porte (18) et une porte (20) couplée audit cadre de porte (18) pouvant se déplacer entre une position ouverte et une position fermée de sorte à fournir de manière sélective un accès audit espace sécurisé (8) à travers ladite porte (20), dans lequel ledit module de porte (16) peut se déplacer en translation, dans lequel l'unité de porte (14) est agencée dans ledit couloir (30) de telle manière que le module de porte (16) puisse se déplacer entre une position avant dans laquelle ledit module de porte (16) est situé côté espace sécurisé dudit couloir (30), et une position arrière dans laquelle ledit module de porte (16) est situé côté second espace secondaire dudit couloir (30).

2. Moyen de transport (2) selon la revendication 1, dans lequel ledit module de porte (16) comprend une charnière de porte (34) définissant un axe de pivotement (A) de ladite porte (20), ladite charnière de porte (34) étant agencée de telle sorte que ledit axe de pivotement (A) soit agencé perpendiculaire à un direction de déplacement dudit module de porte (16).

3. Moyen de transport (2) selon l'une des revendications 1 ou 2, dans lequel ledit module de porte (16) comprend en outre un ensemble verrou (31) pour verrouiller de manière détachable ladite porte (20) .

4. Moyen de transport (2) selon la revendication 3, dans lequel ledit ensemble verrou (31) comprend un verrou électromécanique (32).

5. Moyen de transport (2) selon la revendication 4, comprenant en outre des câbles raccordés audit verrou électromécanique (32) au niveau d'une extrémité et pouvant être raccordés à une alimentation électrique au niveau de l'autre extrémité, et un porte-câbles (26) pour guider et protéger lesdits câbles lors d'un mouvement dudit module de porte (16).

6. Moyen de transport (2) selon l'une des revendications précédentes, comprenant en outre un dispositif de guidage (22, 24) pour guider en translation ladite unité de porte (16).

7. Moyen de transport (2) selon la revendication 6, dans lequel ledit dispositif de guidage (22, 24) comprend un rail ou un chemin de roulement (22a, 24a) pour guider ledit module de porte (16).

8. Moyen de transport (2) selon la revendication 7, dans lequel ledit module de porte (16) peut être verrouillé au moins de manière détachable avec ledit dispositif de guidage (22, 24) au niveau de parties d'extrémité dudit dispositif de guidage (22, 24) de telle sorte que ledit module de porte (16) puisse être fixé de manière sélective au niveau de l'une desdites parties d'extrémité.

9. Moyen de transport (2) selon la revendication 8, comprenant en outre un dispositif de verrouillage de module de porte (36) pour verrouiller de manière détachable ledit module de porte (16) avec ledit dispositif de guidage (22, 24), ledit dispositif de verrouillage de module de porte (36) pouvant être actionné par un utilisateur seulement du côté espace sécurisé dudit module de porte (16).

10. Moyen de transport (2) selon la revendication 9, dans lequel ledit dispositif de verrouillage de module de porte (36) comprend un dispositif de verrouillage électromécanique (40) permettant un déverrouillage dudit dispositif de verrouillage de module de porte (36) seulement dans le cas où une condition prédéterminée est satisfaite.

11. Moyen de transport (2) selon les revendications 1 à 10, dans lequel ladite unité de porte (14) comprend un dispositif de verrouillage de module de porte pouvant être actionné depuis ledit côté espace sécurisé pour verrouiller de manière détachable ledit module de porte (16) avec ledit dispositif de guidage (22, 24) de manière sélective au niveau de ladite position avant ou de ladite position arrière, dans lequel ledit dispositif de verrouillage de module de porte (36) est, de préférence, configuré de sorte à être actionné seulement dans le cas où une condition prédéterminée est remplie.

12. Moyen de transport (2) selon la revendication 11, comprenant en outre un capteur de présence (42) pour déterminer la présence d'une personne dans ledit premier espace secondaire (12) dans lequel ledit dispositif de verrouillage de module de porte (36) peut être actionné seulement si ledit capteur de présence (42) détermine qu'aucune personne n'est présente dans ledit premier espace secondaire (12).

13. Moyen de transport (2) selon la revendication 11 ou la revendication 12, comprenant en outre un moyen de fonctionnement (50), de préférence, un commutateur, pour faire fonctionner ledit dispositif de verrouillage de module de porte et disposé dans ledit premier espace secondaire (12), dans lequel ledit dispositif de verrouillage de module de porte (36) est configuré de telle sorte que, lorsque ledit module de porte (16) est agencé et verrouillé dans ladite position arrière, ledit module de porte (16) peut être déverrouillé seulement en faisant fonctionner ledit moyen de fonctionnement (50) dans ledit premier espace secondaire (12).

14. Moyen de transport selon l'une des revendications 1 à 13, ledit moyen de transport étant un aéronef (2), dans lequel ledit espace sécurisé (8) est un poste de pilotage, ledit premier espace secondaire (12) constitue des toilettes disposées adjacentes audit poste de pilotage (8) dans une direction longitudinale dudit aéronef (2), ledit second espace secondaire est une cabine (28) dudit aéronef, ledit couloir est une allée (30) dudit aéronef reliant ladite cabine audit poste de pilotage et dans lequel ladite unité de porte (14) est agencée dans ladite allée (30) de telle sorte que ledit module de porte (16) soit mobile entre une position avant, dans laquelle ledit module de porte (16) pouvant se déplacer en translation est situé côté poste de pilotage de ladite allée (30), et une position arrière dans laquelle ledit module de porte (16) pouvant se déplacer en translation est situé côté cabine de ladite allée (30).
